# EUROPEAN PATENT SPECIFICATION

(11) **EP 4 478 674 B1**
(45) Date of publication and mention of the grant of the patent: **20.05.2026**
(21) Application number: 22924891.9
(22) Date of filing: 07.02.2022
(51) Int. Cl.: H04L 27/00, H04L 27/36, H04L 1/00, H04W 52/26

(54) **WIRELESS COMMUNICATION METHOD, WIRELESS COMMUNICATION SYSTEM, AND WIRELESS TRANSMISSION DEVICE**
DRAHTLOSKOMMUNIKATIONSVERFAHREN, DRAHTLOSKOMMUNIKATIONSSYSTEM UND DRAHTLOSÜBERTRAGUNGSVORRICHTUNG
PROCÉDÉ DE COMMUNICATION SANS FIL, SYSTÈME DE COMMUNICATION SANS FIL, ET DISPOSITIF DE TRANSMISSION SANS FIL

(43) Date of publication of application: 18.12.2024
(73) Proprietor: NTT, Inc., Tokyo 100-8116 (JP)
(72) Inventor: KURIYAMA, Keita, Musashino-shi, Tokyo 180-8585 (JP); FUKUZONO, Hayato, Musashino-shi, Tokyo 180-8585 (JP); MIYAGI, Toshifumi, Musashino-shi, Tokyo 180-8585 (JP); ONIZAWA, Takeshi, Musashino-shi, Tokyo 180-8585 (JP)
(74) Representative: Hoffmann Eitle
(86) International application number: PCT/JP2022/004753
(87) International publication number: WO 2023/148984

(56) References cited:
- WO-A1-2021/213629
- WO-A2-2006/076697
- CN-A- 101 867 437
- JP-A- 2008 109 320
- JP-A- 2015 177 435
- RAMDANE CHOUITEM: "EVM based AMC for an OFDM system", WIRELESS TELECOMMUNICATIONS SYMPOSIUM (WTS), 2010, IEEE, 21 April 2010 (2010-04-21), Piscataway, NJ, USA , pages 1 - 5, XP031686233, ISBN: 978-1-4244-6558-3

## Description

### Technical Field

The present disclosure relates to a wireless communication method, a wireless communication system, and a wireless transmission device, and more particularly, to a wireless communication method, a wireless communication system, and a wireless transmission device suitable for use in an environment where transmission power changes.

### Background Art

JP 2008 109320 A (NEC CORP) 8 May 2008 (2008-05-08)discloses an adaptive modulation system using various modulation schemes.

Non Patent Literature 1 below describes details of quadrature amplitude modulation (QAM), which is one multi-level modulation scheme for wireless communication. In addition, Non Patent Literature 2 below describes details of amplitude phase shift keying (APSK) which is another example of a multi-level modulation scheme. As represented by these schemes, various multi-level modulation schemes are used in the field of wireless communication.

With regard to the influence of different multi-level modulation schemes on the quality of wireless communication, Non Patent Literature 3 below discloses the following matters:
1. Peak to average power ratio (PAPR) is different for each multi-level modulation scheme;
2. When a power amplifier on the transmitting side uses a nonlinear region, a signal is more likely to be erroneously recognized on the receiving side as the PAPR is higher;
3. When APSK and QAM are compared, the APSK having a lower PAPR is more robust when transmitted in the nonlinear region of the power amplifier.

### Citation List

### Non Patent Literature

Non Patent Literature 1: IEEE Std 802.11ac-2013, IEEE, 2013
Non Patent Literature 2: ETSI EN 302 307-1 V1.4.1, Digital Video Broadcasting, November 2014
Non Patent Literature 3: "M-APSK Modulation for SC-FDMA Communication Systems", Juraj GAZDA, Denis DUPAK, Dusan KOCUR, Department of Electronics and Multimedia Communications, Faculty of Electrical Engineering and Informatics, Technical University of Kosice, Letna 9, 04200 Kosice, Slovakia, 2011

### Summary of Invention

### Technical Problem

On the other hand, in a constellation of symbols used in QAM, a plurality of symbols are arranged in a lattice. On the other hand, in the constellation of symbols used in APSK, a plurality of symbols are arranged in one or more concentric circles. When comparing the two, if the number of symbols is the same, the minimum Euclidean distance between the symbols arranged on a QAM constellation is longer than the minimum Euclidean distance on an APSK constellation.

In the communication of the multi-level modulation scheme, the receiving side recognizes the received signal as one of the symbols on the constellation stored in advance. Specifically, likelihoods of a received signal and symbols present around the received signal are calculated for the constellation, and a symbol having the highest likelihood is recognized as the received signal. In this case, the identification accuracy of the received signal becomes higher as the Euclidean distance between the symbols arranged on the constellation is longer. Therefore, in an environment where a received signal is transmitted without distortion, QAM having a longer minimum Euclidean distance is more likely to ensure an excellent bit error rate (BER) compared with APSK.

In a situation where the power amplifier on the transmitting side can amplify a transmission signal in a linear region, distortion hardly occurs in the transmission signal. Therefore, in such a situation, it is easier to ensure better communication quality with QAM than with APSK. On the other hand, in a situation where the transmission power is large and the power amplifier amplifies a signal in a nonlinear region, the case of using APSK is more likely to ensure excellent communication quality than the case of using QAM due to the reason described in Non Patent Literature 3.

In this way, when the suitability of each multi-level modulation scheme is compared, the superiority and inferiority may be reversed depending on whether the power amplifier uses the linear region or the nonlinear region. However, conventionally, control for appropriately switching a multi-level modulation scheme used for communication according to transmission power has not been studied. In this regard, the conventional wireless communication technology has room for further improvement by switching and using a plurality of multi-level modulation schemes.

The present disclosure has been made in view of the above problems, and a first object of the present disclosure is to provide a wireless communication method for ensuring excellent communication quality over a wide transmission power range by appropriately switching and using a plurality of multi-level modulation schemes according to transmission power.

In addition, a second object of the present disclosure is to provide a wireless communication system that ensures excellent communication quality over a wide transmission power range by appropriately switching and using a plurality of multi-level modulation schemes according to transmission power.

In addition, a third object of the present disclosure is to provide a wireless transmission device that ensures excellent communication quality over a wide transmission power range by appropriately switching and using a plurality of multi-level modulation schemes according to transmission power.

### Solution to Problem

In order to achieve the above objects, a first aspect is desirably a wireless communication method using a wireless transmission device and a wireless reception device that support at least two multi-level modulation schemes,
the at least two multi-level modulation schemes including a first modulation scheme and a second modulation scheme, and
the wireless transmission device including a power amplifier that varies transmission power, the wireless communication method including:
   a step of acquiring, by the wireless transmission device, a first required signal-noise ratio (SNR) to be ensured when using the first modulation scheme and a second required SNR to be ensured when using the second modulation scheme;
   a step of modulating, by the wireless transmission device, a transmission signal using the first modulation scheme to generate a first modulated signal;
   a step of modulating, by the wireless transmission device, a transmission signal using the second modulation scheme to generate a second modulated signal;
   a step of calculating, by the wireless transmission device, a first SNR degradation amount predicted to occur when the first modulated signal is amplified by the power amplifier at desired transmission power, on the basis of input/output characteristics of the power amplifier;
   a step of calculating, by the wireless transmission device, a second SNR degradation amount predicted to occur when the second modulated signal is amplified by the power amplifier at the desired transmission power, on the basis of the input/output characteristics;
   a step of calculating, by the wireless transmission device, a first index representing appropriateness of using the first modulation scheme for communication on the basis of the first required SNR and the first SNR degradation amount;
   a step of calculating, by the wireless transmission device, a second index representing appropriateness of using the second modulation scheme for communication on the basis of the second required SNR and the second SNR degradation amount;
   a step of selecting, by the wireless transmission device, one of the first modulation scheme and the second modulation scheme as a scheme to be used for communication on the basis of a result of comparison between the first index and the second index;
   a step of commanding, by the wireless transmission device, the wireless reception device to perform communication using the selected modulation scheme; and
   a step of communicating, by the wireless reception device, with the wireless transmission device using the commanded modulation scheme.

A second aspect is desirably a wireless communication system using a wireless transmission device and a wireless reception device that support at least two multi-level modulation schemes, in which
the at least two multi-level modulation schemes include a first modulation scheme and a second modulation scheme,
the wireless transmission device
includes a power amplifier that varies transmission power, and
is configured to execute:
   a process of acquiring a first required SNR to be ensured when using the first modulation scheme and a second required SNR to be ensured when using the second modulation scheme;
   a process of modulating a transmission signal using the first modulation scheme to generate a first modulated signal;
   a process of modulating a transmission signal using the second modulation scheme to generate a second modulated signal;
   a process of calculating a first SNR degradation amount predicted to occur when the first modulated signal is amplified by the power amplifier at desired transmission power, on the basis of input/output characteristics of the power amplifier;
   a process of calculating a second SNR degradation amount predicted to occur when the second modulated signal is amplified by the power amplifier at the desired transmission power, on the basis of the input/output characteristics;
   a process of calculating a first index representing appropriateness of using the first modulation scheme for communication on the basis of the first required SNR and the first SNR degradation amount;
   a process of calculating a second index representing appropriateness of using the second modulation scheme for communication on the basis of the second required SNR and the second SNR degradation amount;
   a process of selecting one of the first modulation scheme and the second modulation scheme as a scheme to be used for communication on the basis of a result of comparison between the first index and the second index; and
   a process of commanding the wireless reception device to perform communication using the selected modulation scheme, and
   the wireless reception device is configured to communicate with the wireless transmission device using the commanded modulation scheme.

A third aspect is desirably a wireless transmission device that supports at least two multi-level modulation schemes and has a function of communicating with a wireless reception device that supports the at least two multi-level modulation schemes, in which
the at least two multi-level modulation schemes include a first modulation scheme and a second modulation scheme, and
the wireless transmission device
includes a power amplifier that varies transmission power, and
is configured to execute:
   a process of acquiring a first required SNR to be ensured when using the first modulation scheme and a second required SNR to be ensured when using the second modulation scheme;
   a process of modulating a transmission signal using the first modulation scheme to generate a first modulated signal;
   a process of modulating a transmission signal using the second modulation scheme to generate a second modulated signal;
   a process of calculating a first SNR degradation amount predicted to occur when the first modulated signal is amplified by the power amplifier at desired transmission power, on the basis of input/output characteristics of the power amplifier;
   a process of calculating a second SNR degradation amount predicted to occur when the second modulated signal is amplified by the power amplifier at the desired transmission power, on the basis of the input/output characteristics;
   a process of calculating a first index representing appropriateness of using the first modulation scheme for communication on the basis of the first required SNR and the first SNR degradation amount;
   a process of calculating a second index representing appropriateness of using the second modulation scheme for communication on the basis of the second required SNR and the second SNR degradation amount;
   a process of selecting one of the first modulation scheme and the second modulation scheme as a scheme to be used for communication on the basis of a result of comparison between the first index and the second index; and
   a process of commanding the wireless reception device to perform communication using the selected modulation scheme.

### Advantageous Effects of Invention

According to the first to third aspects, it is possible to ensure excellent communication quality in a wide transmission power range by appropriately switching a plurality of multi-level modulation schemes according to transmission power in an environment where the plurality of multi-level modulation schemes can be used.

### Brief Description of Drawings

Fig. 1 is a diagram illustrating a configuration example of a wireless communication system according to a first embodiment of the present disclosure.
Fig. 2 is a diagram illustrating an APSK constellation and a QAM constellation in comparison.
Fig. 3 is a diagram illustrating characteristics of QAM and APSK in comparison.
Fig. 4 is a diagram for describing input/output characteristics of a power amplifier included in a wireless transmission device illustrated in Fig. 1.
Fig. 5 is a diagram illustrating the suitability of QAM and APSK in comparison between a case where the power amplifier uses a linear region and a case where the power amplifier uses a nonlinear region.
Fig. 6 is a block diagram for describing a configuration of the wireless transmission device according to the first embodiment of the present disclosure.
Fig. 7 is a flowchart for describing a flow of main processing performed by the wireless transmission device illustrated in Fig. 6.

### Description of Embodiments

### First Embodiment.

### [Overall Configuration of First Embodiment]

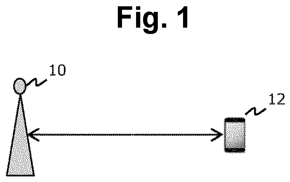

Fig. 1 is a diagram illustrating a configuration example of a wireless communication system according to a first embodiment of the present disclosure. As illustrated in Fig. 1, the system of the present embodiment includes a wireless transmission device 10 and a wireless reception device 12. The wireless transmission device 10 can be, for example, a wireless communication base station managed by a communication carrier or an access point of a wireless local area network (LAN). On the other hand, the wireless reception device 12 may be a terminal device capable of performing communication in both or one of the licensed band and the unlicensed band.

### [Features of First Embodiment]

In the present embodiment, the wireless transmission device 10 and the wireless reception device 12 each have a function of supporting a plurality of multi-level modulation schemes. Here, specifically, a case where the wireless transmission device 10 and the wireless reception device 12 support quadrature amplitude modulation (QAM) and amplitude phase shift keying (APSK), respectively, will be described.

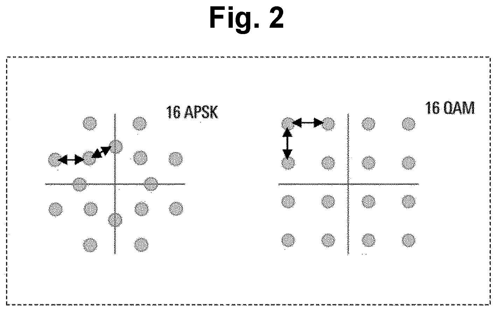

Fig. 2 is a diagram illustrating an APSK constellation and a QAM constellation in comparison. More specifically, the left side of Fig. 2 illustrates a 16 APSK constellation that handles 16 symbols. In addition, the right side of Fig. 2 illustrates a 16 QAM constellation that handles 16 symbols in the same manner. The position of each symbol represents amplitude and phase.

In the 16 APSK constellation, 16 symbols are arranged at equal intervals by eight symbols on two concentric circles. On the other hand, in the 16 QAM constellation, 16 symbols are arranged at equal intervals in a lattice. In the drawing, the minimum Euclidean distance between symbols in each constellation is represented by a bidirectional arrow. When comparing the two, it can be seen that the minimum Euclidean distance in the case of QAM in which symbols are arranged in a lattice is larger than that in the case of APSK.

Next, a peak to average power ratio (PAPR) will be considered. For transmission of individual symbols on a constellation, a larger amplitude requires a larger power. Therefore, in the APSK, peak power occurs when eight symbols arranged on the outer concentric circle are transmitted. On the other hand, in the case of QAM, peak power occurs when four symbols positioned at four corners are transmitted. Therefore, the ratio of the peak transmission power to the value obtained by averaging the transmission power for all the symbols is lower in the APSK. Therefore, when APSK is used, the PAPR tends to be a lower value than when QAM is used.

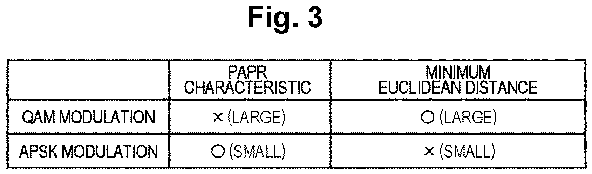

Fig. 3 illustrates the characteristics of the minimum Euclidean distance and PAPR described above in comparison between QAM and APSK. ∘ and × illustrated in the drawing indicate superiority and inferiority in ensuring a good bit error rate (BER) in wireless communication. The reason why such superiority and inferiority occur will be described below.

The wireless reception device 12 illustrated in Fig. 1 receives a command regarding a modulation scheme to be used for communication from the wireless transmission device 10, and selects a modulation scheme according to the command. In any modulation scheme, the wireless reception device 12 arranges the received signal on a constellation on the basis of the amplitude and the phase, and calculates a likelihood with the received signal for each of the plurality of symbols located around the received signal. Then, the received signal is recognized as a symbol having the highest likelihood.

The longer the minimum Euclidean distance on the constellation is, the large difference is likely to occur in the likelihood calculated for each symbol. Therefore, if the received signal is correctly arranged on the constellation, it is easier to ensure the excellent BER when the QAM having a large minimum Euclidean distance is used than when the APSK having a small minimum Euclidean distance is used. The rightmost column in Fig. 3 represents the relationship as QAM "∘ (large)" and APSK "× (small)".

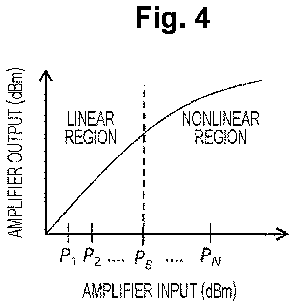

Fig. 4 illustrates input/output characteristics of the power amplifier included in the wireless transmission device 10 illustrated in Fig. 1. As illustrated in Fig. 4, the power amplifier exhibits a linear input/output characteristic in a region where the input power is P_{B} or less, but the characteristic becomes nonlinear in a region where the input power exceeds P_{B}. Then, distortion is superimposed on the signal amplified by the power amplifier using the nonlinear region. If the distortion occurs in the received signal, in the wireless reception device 12, the received signal is arranged at a position shifted from the original position on the constellation. As a result, the signal amplified in the nonlinear region is likely to be erroneously recognized as an erroneous symbol in the wireless reception device 12.

When the wireless transmission device 10 transmits a radio signal, even if the average power falls within the linear region, a signal with a large amplitude may enter the nonlinear region of the power amplifier. Such a phenomenon is more likely to occur as the PAPR of the multi-level modulation scheme used for communication is larger. Therefore, from the viewpoint of preventing signal misrecognition caused by distortion without distorting the transmission signal, APSK having a low PAPR is superior to QAM having a high PAPR. The center column of Fig. 3 represents the above relationship by the indication of QAM "× (large)" and APSK "∘ (small)".

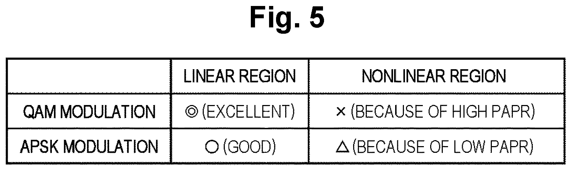

Fig. 5 is a diagram illustrating the suitability of QAM and APSK in comparison between a case where the power amplifier uses a linear region and a case where the power amplifier uses a nonlinear region. When the input power to the power amplifier falls within the linear region, the problem of distortion does not occur even if any modulation scheme is used. In this case, a better BER can be obtained by using QAM rather than APSK in relation to the minimum Euclidean distance. The center column in Fig. 5 represents the above relationship by the indication of QAM "⊙ (excellent)" and APSK "∘ (good)".

In the nonlinear region of the power amplifier, the larger the input power, the larger the distortion superimposed on the transmission signal. Therefore, when the input power enters the nonlinear region, a larger distortion is superimposed on the signal corresponding to the peak as the PAPR is higher in the multi-level modulation scheme. Then, as the distortion superimposed on the transmission signal is larger, the signal is more likely to be erroneously recognized in the wireless reception device 12. For this reason, in a situation in which the power transmission device uses the nonlinear region, the communication quality of QAM having a high PAPR is likely to deteriorate more than that of APSK having a low PAPR. The rightmost column in Fig. 5 represents the above relationship by the indication of QAM "× (because of high PAPR)" and APSK "Δ (because of low PAPR)".

As described above, the superiority and inferiority of QAM and APSK are reversed depending on whether the operation region of the power amplifier is a linear region or a nonlinear region. Therefore, in the present embodiment, the multi-level modulation scheme used for communication is appropriately switched between QAM and APSK so that excellent communication quality can be obtained in a real environment in response to this reversal.

### [Configuration of Wireless Transmission Device]

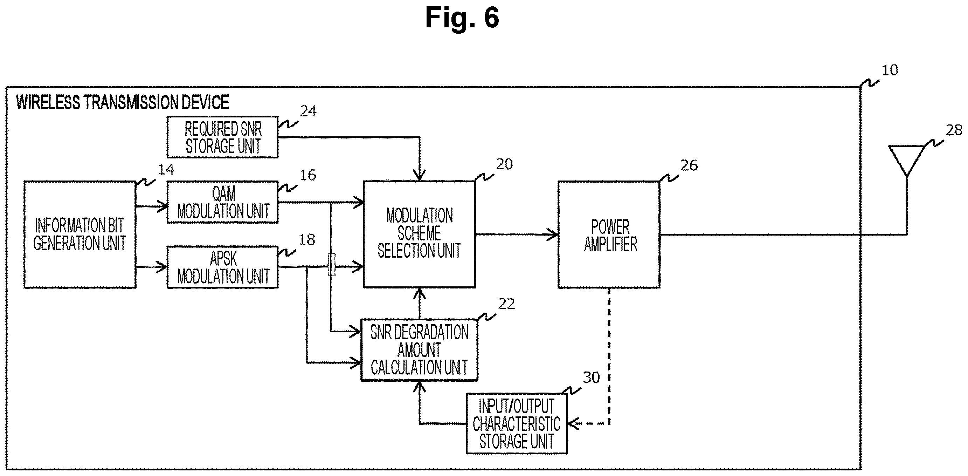

Fig. 6 is a block diagram for describing a configuration of the wireless transmission device 10 used in the present embodiment to implement the above functions. Each element illustrated in Fig. 6 can be configured by dedicated hardware. Furthermore, these elements can also be configured using an arithmetic processing unit and a program for causing the arithmetic processing unit to execute desired processing, in addition to dedicated hardware.

As illustrated in Fig. 6, the wireless transmission device 10 includes an information bit generation unit 14. The information bit generation unit 14 generates bit data corresponding to information to be transmitted to the wireless reception device 12. The bit data generated by the information bit generation unit 14 is provided to a QAM modulation unit 16 and an APSK modulation unit 18.

The QAM modulation unit 16 modulates the received bit data according to a QAM scheme. On the other hand, the APSK modulation unit 18 modulates the bit data according to an APSK scheme. In either case, a modulated signal generated by modulation is provided to a modulation scheme selection unit 20 and a signal-noise ratio (SNR) degradation amount calculation unit 22.

An SNR degradation amount {QAM} and an SNR degradation amount {APSK} are provided from the SNR degradation amount calculation unit 22 to the modulation scheme selection unit 20. Further, a required SNR {QAM} and a required SNR {APSK} are provided from the required SNR storage unit 24 to the modulation scheme selection unit 20. The modulation scheme selection unit 20 has a function of selecting a scheme to be used for communication from among a plurality of multi-level modulation schemes on the basis of the information. In the present embodiment, since QAM and APSK are assumed as modulation schemes used for communication, the modulation scheme selection unit 20 selects either QAM or APSK as a scheme to be used for communication. The process of selecting the modulation scheme by the modulation scheme selection unit 20 will be described in detail later.

When the modulation scheme selection unit 20 selects QAM, the signal modulated by the QAM modulation unit 16 is supplied to a power amplifier 26. On the other hand, when the modulation scheme selection unit 20 selects APSK, the signal modulated by the APSK modulation unit 18 is supplied to the power amplifier 26.

The power amplifier 26 amplifies the modulated signal generated by the QAM modulation unit 16 or the APSK modulation unit 18 to desired transmission power and supplies the transmission power to an antenna 28. As a result, a signal amplified to desired power by the power amplifier 26 is transmitted from the antenna 28 according to the modulation scheme selected by the modulation scheme selection unit 20.

The wireless transmission device 10 according to the present embodiment includes an input/output characteristic storage unit 30. The input/output characteristic storage unit 30 stores input/output characteristics of the power amplifier 26 in advance. For example, a curve of input/output characteristics as illustrated in Fig. 4 is stored. The input/output characteristic storage unit 30 can provide information on the input/output characteristics to the SNR degradation amount calculation unit 22.

As described above, the required SNR storage unit 24 provides the required SNR {QAM} and the required SNR {APSK} to the modulation scheme selection unit 20. The required SNR necessary for ensuring the desired communication quality has a different value for each modulation scheme. The required SNR {QAM} is a value of SNR to be ensured to obtain desired communication quality when QAM is used as the modulation scheme. On the other hand, the required SNR {APSK} is a value of SNR to be ensured when APSK is used.

The minimum Euclidean distance on the constellation is larger in the case of QAM than in the case of APSK. Therefore, assuming that the transmission signal is transmitted without distortion, the required SNR of QAM is smaller than the required SNR of APSK. Then, since the robustness of communication becomes higher as the required SNR is lower, it is evaluated that the QAM having a lower required SNR has a higher priority of adoption than the APSK under the above assumption.

As described above, the SNR degradation amount calculation unit 22 provides the SNR degradation amount {QAM} and the SNR degradation amount {APSK} to the modulation scheme selection unit 20. The wireless transmission device 10 transmits the signal amplified by the power amplifier 26. As described above, the distortion is superimposed on the signal amplified by the power amplifier 26 in the nonlinear region. If distortion is superimposed on the transmission signal, the SNR is degraded. The SNR degradation amount {QAM} is an SNR degradation amount assumed to occur when the signal modulated by the QAM modulation unit 16 is amplified by the power amplifier 26. Also, the SNR degradation amount {APSK} is an SNR degradation amount assumed to occur when the signal modulated by the APSK modulation unit 18 is amplified by the power amplifier 26.

In the present embodiment, the SNR degradation amount is calculated on the basis of an error vector magnitude (EVM). The EVM is a magnitude of a deviation between symbols included in a signal reaching the wireless reception device 12 and their original positions on the constellation. The EVM can be obtained by calculation if the symbols included in the transmission signal, the transmission power given to the symbols, and the input/output characteristics of the power amplifier 26 are known. The SNR degradation amount calculation unit 22 calculates the SNR degradation amount {QAM} on the basis of the modulated signal generated by the QAM modulation unit 16, the input/output characteristics acquired from the input/output characteristic storage unit 30, and the setting of the transmission power used by the power amplifier 26, and similarly calculates the SNR degradation amount {APSK} on the basis of the modulated signal generated by the APSK modulation unit 18.

The value of the EVM represents the magnitude of degradation of the transmission signal. Therefore, the EVM can be used as it is as the SNR degradation amount. Alternatively, an average SNR may be calculated for each modulation scheme, a predicted SNR of the transmission signal may be calculated on the basis of the EVM, and a difference between the average SNR and the predicted SNR may be used as the SNR degradation amount. In addition, the EVM may be a convergence value for each modulation scheme determined according to transmission power, or may be a value for each piece of transmission data determined by a combination of transmission power and symbols to be transmitted.

The value of the EVM increases as the distortion of the transmission signal increases. The distortion of the transmission signal is likely to occur when the power amplifier 26 uses the nonlinear region. When that region is used, a QAM signal having a high PAPR is more likely to be distorted than an APSK signal having a low PAPR. Therefore, in a situation where the power amplifier 26 uses the nonlinear region, it can be evaluated that the APSK in which distortion is less likely to occur in the transmission signal and the SNR degradation amount is likely to be small has a higher priority of adoption than QAM.

The modulation scheme selection unit 20 selects a modulation scheme to be used for communication by the following processes:
(1) Calculate required SNR {QAM} + SNR degradation amount {QAM} = "QAM index";
(2) Calculate required SNR {APSK} + SNR degradation amount {APSK} = "APSK index";
(3) Compare QAM index with APSK index, and select modulation scheme having smaller value

Both the required SNR and the SNR degradation amount are characteristic values that are small values for a scheme having a high priority of adoption. Therefore, if a scheme having a small "index" which is the sum thereof is selected, it is possible to correctly select a scheme to be adopted for obtaining good communication quality. However, in the above processes (1) and (2), the required SNR and the SNR degradation amount are treated with the same weighting, but the present disclosure is not limited thereto. The above processes (1) and (2) may be changed to give a larger weighting than one or the other of the required SNR and the SNR degradation amount.

### [Flow of Processing in First Embodiment]

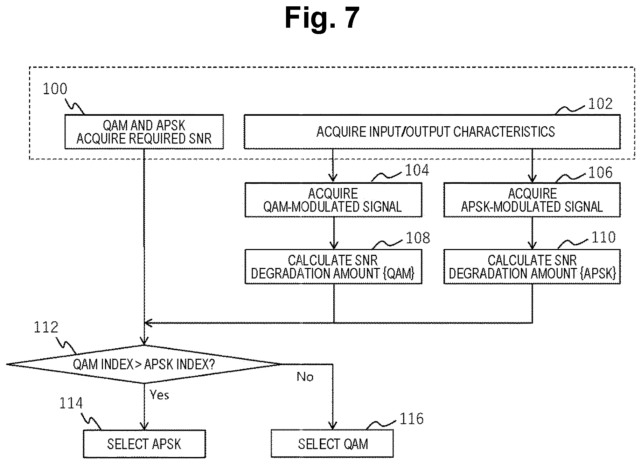

Fig. 7 is a flowchart for describing a flow of main processing performed by the wireless transmission device 10 illustrated in Fig. 6. More specifically, it is a flowchart for describing a flow of processing executed in the modulation scheme selection unit 20 and the SNR degradation amount calculation unit 22.

In Fig. 7, the process of step 100 is executed in the modulation scheme selection unit 20. Here, the required SNR {QAM} and the required SNR {APSK} are read from the required SNR storage unit 24 (step 100).

The processes of steps 102 to 110 are executed in the SNR degradation amount calculation unit 22. Specifically, first, the input/output characteristics of the power amplifier 26 are read from the input/output characteristic storage unit 30 (step 102). The processes of steps 100 and 102 above, that is, the processes surrounded by a broken-line frame in Fig. 7 may be performed only once as an initialization process at the start of the operation of the wireless transmission device 10.

Next, the SNR degradation amount calculation unit 22 acquires a QAM-modulated signal from the QAM modulation unit 16 (step 104), and acquires an APSK-modulated signal from the APSK modulation unit 18 (step 106). Subsequently, the SNR degradation amount {QAM} predicted to occur when QAM-modulated bits are transmitted at the transmission power set in the power amplifier 26 is calculated (step 108). Further, the SNR degradation amount {APSK} predicted to occur when APSK-modulated bits are transmitted at the same transmission power is calculated (step 110).

The processes of step 112 to 116 are executed in the modulation scheme selection unit 20. That is, when the processes of step 100 to 110 above are completed, the modulation scheme selection unit 20 first compares the QAM index that is the sum of the required SNR {QAM} and the SNR degradation amount {QAM} with the APSK index that is the sum of the required SNR {APSK} and the SNR degradation amount {APSK} (step 112).

Then, when QAM index > APSK index is recognized, APSK is selected as the modulation scheme to be used for communication (step 114). On the other hand, when the above relationship is not recognized, QAM is selected as the modulation scheme to be used for communication (step 116). Note that the processes of step 104 to 116 are repeatedly executed for each transmission frame.

As described above, according to the wireless communication system of the present embodiment, a plurality of multi-level modulation schemes can be appropriately switched and used on the basis of the required SNR and SNR degradation amount. Even when the power amplifier 26 uses any transmission power, it is possible to always select and use a modulation scheme advantageous for obtaining high communication quality. Therefore, according to the wireless communication system of the present embodiment, excellent communication quality can be stably ensured over a wide transmission power range.

### [Modification Example of First Embodiment]

Incidentally, in the first embodiment described above, two of 16 QAM and 16 APSK are used as the multi-level modulation scheme, but the present disclosure is not limited thereto. The number of symbols is not limited to 16, and the number of symbols of the two modulation schemes may be different. In addition, various transmission schemes such as orthogonal frequency division multiplexing (OFDM) transmission, discrete Fourier transform-spread-OFDM (DFT-s-OFDM) transmission, and single carrier (SC) transmission can be applied. Various system configurations such as a single input and single output (SISO) configuration and a multiple input and multiple output (MIMO) configuration can be applied. Further, schemes such as Faster-than-Nyquist (FTN) transmission and Nyquist transmission can also be applied. In addition, three or more modulation schemes may be used to appropriately select an optimum modulation scheme from among these modulation schemes.

Furthermore, in the first embodiment described above, the required SNR is treated as a fixed value for each multi-level modulation scheme, but the present disclosure is not limited thereto. For example, the required SNR may be appropriately set according to the required quality of communication. According to such a setting, the frequency of switching the modulation scheme may be reduced.

Furthermore, in the first embodiment described above, the QAM index and the APSK index are updated for each frame, and an optimum modulation scheme is selected for each frame. However, the present disclosure is not limited thereto. That is, the frequency of switching the modulation scheme may be set lower than that of every frame by updating the SNR degradation amount {QAM} and the SNR degradation amount {APSK} every plurality of frames or every fixed time.

In addition, in the first embodiment described above, the wireless transmission device 10 does not include an adaptive transmission power control unit (ATPC: adaptive transmission power control), but the present disclosure is not limited thereto. That is, ATPC may be incorporated in the wireless transmission device 10, and the transmission power used by the power amplifier 26 may be designated by the ATPC.

### Reference Signs List

- 10: Wireless transmission device
- 12: Wireless reception device
- 16: QAM modulation unit
- 18: APSK modulation unit
- 20: Modulation scheme selection unit
- 22: SNR degradation amount calculation unit
- 24: Required SNR storage unit
- 26: Power amplifier
- 30: Input/output characteristic storage unit

## Claims

1. A wireless communication method using a wireless transmission device (10) and a wireless reception device (12) that support at least two multi-level modulation schemes,
the at least two multi-level modulation schemes including a first modulation scheme and a second modulation scheme, and
the wireless transmission device including a power amplifier that varies transmission power, the wireless communication method comprising:
a step of acquiring, by the wireless transmission device, a first required signal-noise ratio, SNR, to be ensured when using the first modulation scheme and a second required SNR to be ensured when using the second modulation scheme;
a step of modulating, by the wireless transmission device, a transmission signal using the first modulation scheme to generate a first modulated signal;
a step of modulating, by the wireless transmission device, a transmission signal using the second modulation scheme to generate a second modulated signal;
a step of calculating, by the wireless transmission device, a first SNR degradation amount predicted to occur when the first modulated signal is amplified by the power amplifier at desired transmission power, on the basis of input/output characteristics of the power amplifier;
a step of calculating, by the wireless transmission device, a second SNR degradation amount predicted to occur when the second modulated signal is amplified by the power amplifier at the desired transmission power, on the basis of the input/output characteristics;
a step of calculating, by the wireless transmission device, a first index representing appropriateness of using the first modulation scheme for communication on the basis of the first required SNR and the first SNR degradation amount;
a step of calculating, by the wireless transmission device, a second index representing appropriateness of using the second modulation scheme for communication on the basis of the second required SNR and the second SNR degradation amount;
a step of selecting, by the wireless transmission device, one of the first modulation scheme and the second modulation scheme as a scheme to be used for communication on the basis of a result of comparison between the first index and the second index;
a step of commanding, by the wireless transmission device, the wireless reception device to perform communication using the selected modulation scheme; and
a step of communicating, by the wireless reception device, with the wireless transmission device using the commanded modulation scheme.

2. The wireless communication method according to claim 1, wherein the first required SNR is a fixed value set for the first modulation scheme, and the second required SNR is a fixed value set for the second modulation scheme.

3. The wireless communication method according to claim 1, wherein each of the first required SNR and the second required SNR is a value set on the basis of quality of communication to be established.

4. The wireless communication method according to any one of claims 1 to 3, wherein
the step of calculating the first SNR degradation amount includes:
a step of estimating a first error vector magnitude, EVM, which is an EVM for the first modulated signal included in the transmission signal of one frame; and
a step of calculating the first SNR degradation amount on the basis of the first EVM, and
the step of calculating the second SNR degradation amount includes:
a step of estimating a second EVM, which is an EVM for the second modulated signal included in the transmission signal of one frame; and
a step of calculating the second SNR degradation amount on the basis of the second EVM.

5. The wireless communication method according to any one of claims 1 to 3, wherein
the step of calculating the first SNR degradation amount includes:
a step of estimating a first EVM, which is an EVM for the first modulated signal included in the transmission signal over a plurality of frames; and
a step of calculating the first SNR degradation amount on the basis of the first EVM, and
the step of calculating the second SNR degradation amount includes:
a step of estimating a second EVM, which is an EVM for the second modulated signal included in the transmission signal over a plurality of frames; and
a step of calculating the second SNR degradation amount on the basis of the second EVM.

6. The wireless communication method according to claim 4 or 5, wherein
the step of calculating the first SNR degradation amount further includes:
a step of calculating a first average SNR, which is an average SNR for the first modulation scheme;
a step of calculating a first predicted SNR on the basis of the first EVM, the first predicted SNR being an SNR predicted to occur when the first modulated signal is transmitted; and
a step of calculating a difference between the first average SNR and the first predicted SNR as the first SNR degradation amount, and
the step of calculating the second SNR degradation amount further includes:
a step of calculating a second average SNR, which is an average SNR for the second modulation scheme;
a step of calculating a second predicted SNR on the basis of the second EVM, the second predicted SNR being an SNR predicted to occur when the second modulated signal is transmitted; and
a step of calculating a difference between the second average SNR and the second predicted SNR as the second SNR degradation amount.

7. A wireless communication system using a wireless transmission device (10) and a wireless reception device that support at least two multi-level modulation schemes, wherein
the at least two multi-level modulation schemes include a first modulation scheme and a second modulation scheme,
the wireless transmission device
includes a power amplifier that varies transmission power, and
is configured to execute:
a process of acquiring a first required SNR to be ensured when using the first modulation scheme and a second required SNR to be ensured when using the second modulation scheme;
a process of modulating a transmission signal using the first modulation scheme to generate a first modulated signal;
a process of modulating a transmission signal using the second modulation scheme to generate a second modulated signal;
a process of calculating a first SNR degradation amount predicted to occur when the first modulated signal is amplified by the power amplifier at desired transmission power, on the basis of input/output characteristics of the power amplifier;
a process of calculating a second SNR degradation amount predicted to occur when the second modulated signal is amplified by the power amplifier at the desired transmission power, on the basis of the input/output characteristics;
a process of calculating a first index representing appropriateness of using the first modulation scheme for communication on the basis of the first required SNR and the first SNR degradation amount;
a process of calculating a second index representing appropriateness of using the second modulation scheme for communication on the basis of the second required SNR and the second SNR degradation amount;
a process of selecting one of the first modulation scheme and the second modulation scheme as a scheme to be used for communication on the basis of a result of comparison between the first index and the second index; and
a process of commanding the wireless reception device to perform communication using the selected modulation scheme, and
the wireless reception device is configured to communicate with the wireless transmission device using the commanded modulation scheme.

8. A wireless transmission device (10) that supports at least two multi-level modulation schemes and has a function of communicating with a wireless reception device that supports the at least two multi-level modulation schemes, wherein
the at least two multi-level modulation schemes include a first modulation scheme and a second modulation scheme, and
the wireless transmission device
comprises a power amplifier that varies transmission power, and
is configured to execute:
a process of acquiring a first required SNR to be ensured when using the first modulation scheme and a second required SNR to be ensured when using the second modulation scheme;
a process of modulating a transmission signal using the first modulation scheme to generate a first modulated signal;
a process of modulating a transmission signal using the second modulation scheme to generate a second modulated signal;
a process of calculating a first SNR degradation amount predicted to occur when the first modulated signal is amplified by the power amplifier at desired transmission power, on the basis of input/output characteristics of the power amplifier;
a process of calculating a second SNR degradation amount predicted to occur when the second modulated signal is amplified by the power amplifier at the desired transmission power, on the basis of the input/output characteristics;
a process of calculating a first index representing appropriateness of using the first modulation scheme for communication on the basis of the first required SNR and the first SNR degradation amount;
a process of calculating a second index representing appropriateness of using the second modulation scheme for communication on the basis of the second required SNR and the second SNR degradation amount;
a process of selecting one of the first modulation scheme and the second modulation scheme as a scheme to be used for communication on the basis of a result of comparison between the first index and the second index; and
a process of commanding the wireless reception device to perform communication using the selected modulation scheme.

## Patentansprüche

1. Drahtloskommunikationsverfahren, das eine Drahtlosübertragungsvorrichtung (10) und eine Drahtlosempfangsvorrichtung (12) verwendet, die mindestens zwei mehrstufige Modulationsschemata unterstützen,
wobei die mindestens zwei mehrstufigen Modulationsschemata ein erstes Modulationsschema und ein zweites Modulationsschema einschließen, und
wobei die Drahtlosübertragungsvorrichtung einen Leistungsverstärker einschließt, der die Sendeleistung variiert, wobei das Drahtloskommunikationsverfahren Folgendes umfasst:
einen Schritt des Erwerbens, durch die Drahtlosübertragungsvorrichtung, eines ersten erforderlichen Signal-Rausch-Verhältnisses, SRV, das bei Verwendung des ersten Modulationsschemas sicherzustellen ist, und eines zweiten erforderlichen SRV, das bei Verwendung des zweiten Modulationsschemas sicherzustellen ist;
einen Schritt des Modulierens, durch die Drahtlosübertragungsvorrichtung, eines Übertragungssignals unter Verwendung des ersten Modulationsschemas zum Erzeugen eines ersten modulierten Signals;
einen Schritt des Modulierens, durch die Drahtlosübertragungsvorrichtung, eines Übertragungssignals unter Verwendung des zweiten Modulationsschemas zum Erzeugen eines zweiten modulierten Signals;
einen Schritt des Berechnens, durch die Drahtlosübertragungsvorrichtung, eines ersten SRV-Verschlechterungsbetrags, von dem vorhergesagt wird, dass er auftritt, wenn das erste modulierte Signal durch den Leistungsverstärker bei gewünschter Sendeleistung verstärkt wird, auf der Grundlage der Ein-/Ausgangskennlinie des Leistungsverstärkers;
einen Schritt des Berechnens, durch die Drahtlosübertragungsvorrichtung, eines zweiten SRV-Verschlechterungsbetrags, von dem vorhergesagt wird, dass er auftritt, wenn das zweite modulierte Signal durch den Leistungsverstärker bei der gewünschten Sendeleistung verstärkt wird, auf der Grundlage der Ein-/Ausgangskennlinie;
einen Schritt des Berechnens, durch die Drahtlosübertragungsvorrichtung, eines ersten Index, der die Eignung der Verwendung des ersten Modulationsschemas für die Kommunikation repräsentiert, auf der Grundlage des ersten erforderlichen SRV und des ersten SRV-Verschlechterungsbetrags;
einen Schritt des Berechnens, durch die Drahtlosübertragungsvorrichtung, eines zweiten Index, der die Eignung der Verwendung des zweiten Modulationsschemas für die Kommunikation repräsentiert, auf der Grundlage des zweiten erforderlichen SRV und des zweiten SRV-Verschlechterungsbetrags;
einen Schritt des Auswählens, durch die Drahtlosübertragungsvorrichtung, eines von dem ersten Modulationsschema und dem zweiten Modulationsschema als ein für die Kommunikation zu verwendendes Schema auf der Grundlage eines Ergebnisses eines Vergleichs zwischen dem ersten Index und dem zweiten Index;
einen Schritt des Anweisens, durch die Drahtlosübertragungsvorrichtung, der Drahtlosempfangsvorrichtung, die Kommunikation unter Verwendung des ausgewählten Modulationsschemas durchzuführen; und
einen Schritt des Kommunizierens, durch die Drahtlosempfangsvorrichtung, mit der Drahtlosübertragungsvorrichtung unter Verwendung des angewiesenen Modulationsschemas.

2. Drahtloskommunikationsverfahren nach Anspruch 1, wobei das erste erforderliche SRV ein für das erste Modulationsschema eingestellter fester Wert ist und das zweite erforderliche SRV ein für das zweite Modulationsschema eingestellter fester Wert ist.

3. Drahtloskommunikationsverfahren nach Anspruch 1, wobei jedes des ersten erforderlichen SRV und des zweiten erforderlichen SRV ein Wert ist, der auf der Grundlage der Qualität der herzustellenden Kommunikation eingestellt ist.

4. Drahtloskommunikationsverfahren nach einem der Ansprüche 1 bis 3, wobei
der Schritt des Berechnens des ersten SRV-Verschlechterungsbetrags Folgendes einschließt:
einen Schritt des Schätzens einer ersten Fehlervektorgröße, EVM, welche eine EVM für das erste modulierte Signal ist, das in dem Übertragungssignal eines Rahmens eingeschlossen ist; und
einen Schritt des Berechnens des ersten SRV-Verschlechterungsbetrags auf der Grundlage der ersten EVM, und
der Schritt des Berechnens des zweiten SRV-Verschlechterungsbetrags Folgendes einschließt:
einen Schritt des Schätzens einer zweiten EVM, welche eine EVM für das zweite modulierte Signal ist, das in dem Übertragungssignal eines Rahmens eingeschlossen ist; und
einen Schritt des Berechnens des zweiten SRV-Verschlechterungsbetrags auf der Grundlage der zweiten EVM.

5. Drahtloskommunikationsverfahren nach einem der Ansprüche 1 bis 3, wobei
der Schritt des Berechnens des ersten SRV-Verschlechterungsbetrags Folgendes einschließt:
einen Schritt des Schätzens einer ersten EVM, welche eine EVM für das erste modulierte Signal ist, das in dem Übertragungssignal über eine Vielzahl von Rahmen eingeschlossen ist; und
einen Schritt des Berechnens des ersten SRV-Verschlechterungsbetrags auf der Grundlage der ersten EVM, und
der Schritt des Berechnens des zweiten SRV-Verschlechterungsbetrags Folgendes einschließt:
einen Schritt des Schätzens einer zweiten EVM, welche eine EVM für das zweite modulierte Signal ist, das in dem Übertragungssignal über eine Vielzahl von Rahmen eingeschlossen ist; und
einen Schritt des Berechnens des zweiten SRV-Verschlechterungsbetrags auf der Grundlage der zweiten EVM.

6. Drahtloskommunikationsverfahren nach Anspruch 4 oder 5, wobei
der Schritt des Berechnens des ersten SRV-Verschlechterungsbetrags weiter Folgendes einschließt:
einen Schritt des Berechnens eines ersten mittleren SRV, welches ein mittleres SRV für das erste Modulationsschema ist;
einen Schritt des Berechnens eines ersten vorhergesagten SRV auf der Grundlage der ersten EVM, wobei das erste vorhergesagte SRV ein SRV ist, von dem vorhergesagt wird, dass es auftritt, wenn das erste modulierte Signal übertragen wird; und
einen Schritt des Berechnens einer Differenz zwischen dem ersten mittleren SRV und dem ersten vorhergesagten SRV als den ersten SRV-Verschlechterungsbetrag, und
der Schritt des Berechnens des zweiten SRV-Verschlechterungsbetrags weiter Folgendes einschließt:
einen Schritt des Berechnens eines zweiten mittleren SRV, welches ein mittleres SRV für das zweite Modulationsschema ist;
einen Schritt des Berechnens eines zweiten vorhergesagten SRV auf der Grundlage der zweiten EVM, wobei das zweite vorhergesagte SRV ein SRV ist, von dem vorhergesagt wird, dass es auftritt, wenn das zweite modulierte Signal übertragen wird; und
einen Schritt des Berechnens einer Differenz zwischen dem zweiten mittleren SRV und dem zweiten vorhergesagten SRV als den zweiten SRV-Verschlechterungsbetrag.

7. Drahtloskommunikationssystem, das eine Drahtlosübertragungsvorrichtung (10) und eine Drahtlosempfangsvorrichtung (12) verwendet, die mindestens zwei mehrstufige Modulationsschemata unterstützen, wobei
die mindestens zwei mehrstufigen Modulationsschemata ein erstes Modulationsschema und ein zweites Modulationsschema einschließen,
die Drahtlosübertragungsvorrichtung
einen Leistungsverstärker einschließt, der die Sendeleistung variiert, und
konfiguriert ist, um Folgendes auszuführen:
einen Prozess des Erwerbens eines ersten erforderlichen SRV, das bei Verwendung des ersten Modulationsschemas sicherzustellen ist, und eines zweiten erforderlichen SRV, das bei Verwendung des zweiten Modulationsschemas sicherzustellen ist;
einen Prozess des Modulierens eines Übertragungssignals unter Verwendung des ersten Modulationsschemas zum Erzeugen eines ersten modulierten Signals;
einen Prozess des Modulierens eines Übertragungssignals unter Verwendung des zweiten Modulationsschemas zum Erzeugen eines zweiten modulierten Signals;
einen Prozess des Berechnens eines ersten SRV-Verschlechterungsbetrags, von dem vorhergesagt wird, dass er auftritt, wenn das erste modulierte Signal durch den Leistungsverstärker bei gewünschter Sendeleistung verstärkt wird, auf der Grundlage der Ein-/Ausgangskennlinie des Leistungsverstärkers;
einen Prozess des Berechnens eines zweiten SRV-Verschlechterungsbetrags, von dem vorhergesagt wird, dass er auftritt, wenn das zweite modulierte Signal durch den Leistungsverstärker bei der gewünschten Sendeleistung verstärkt wird, auf der Grundlage der Ein-/Ausgangskennlinie;
einen Prozess des Berechnens eines ersten Index, der die Eignung der Verwendung des ersten Modulationsschemas für die Kommunikation repräsentiert, auf der Grundlage des ersten erforderlichen SRV und des ersten SRV-Verschlechterungsbetrags;
einen Prozess des Berechnens eines zweiten Index, der die Eignung der Verwendung des zweiten Modulationsschemas für die Kommunikation repräsentiert, auf der Grundlage des zweiten erforderlichen SRV und des zweiten SRV-Verschlechterungsbetrags;
einen Prozess des Auswählens eines von dem ersten Modulationsschema und dem zweiten Modulationsschema als ein für die Kommunikation zu verwendendes Schema auf der Grundlage eines Ergebnisses eines Vergleichs zwischen dem ersten Index und dem zweiten Index; und
einen Prozess des Anweisens der Drahtlosempfangsvorrichtung, die Kommunikation unter Verwendung des ausgewählten Modulationsschemas durchzuführen, und
die Drahtlosempfangsvorrichtung konfiguriert ist, unter Verwendung des angewiesenen Modulationsschemas mit der Drahtlosübertragungsvorrichtung zu kommunizieren.

8. Drahtlosübertragungsvorrichtung (10), die mindestens zwei mehrstufige Modulationsschemata unterstützt und eine Funktion des Kommunizierens mit einer Drahtlosempfangsvorrichtung aufweist, die die mindestens zwei mehrstufigen Modulationsschemata unterstützt, wobei
die mindestens zwei mehrstufigen Modulationsschemata ein erstes Modulationsschema und ein zweites Modulationsschema einschließen, und
die Drahtlosübertragungsvorrichtung
einen Leistungsverstärker umfasst, der die Sendeleistung variiert, und
konfiguriert ist, um Folgendes auszuführen:
einen Prozess des Erwerbens eines ersten erforderlichen SRV, das bei Verwendung des ersten Modulationsschemas sicherzustellen ist, und eines zweiten erforderlichen SRV, das bei Verwendung des zweiten Modulationsschemas sicherzustellen ist;
einen Prozess des Modulierens eines Übertragungssignals unter Verwendung des ersten Modulationsschemas zum Erzeugen eines ersten modulierten Signals;
einen Prozess des Modulierens eines Übertragungssignals unter Verwendung des zweiten Modulationsschemas zum Erzeugen eines zweiten modulierten Signals;
einen Prozess des Berechnens eines ersten SRV-Verschlechterungsbetrags, von dem vorhergesagt wird, dass er auftritt, wenn das erste modulierte Signal durch den Leistungsverstärker bei gewünschter Sendeleistung verstärkt wird, auf der Grundlage der Ein-/Ausgangskennlinie des Leistungsverstärkers;
einen Prozess des Berechnens eines zweiten SRV-Verschlechterungsbetrags, von dem vorhergesagt wird, dass er auftritt, wenn das zweite modulierte Signal durch den Leistungsverstärker bei der gewünschten Sendeleistung verstärkt wird, auf der Grundlage der Ein-/Ausgangskennlinie;
einen Prozess des Berechnens eines ersten Index, der die Eignung der Verwendung des ersten Modulationsschemas für die Kommunikation repräsentiert, auf der Grundlage des ersten erforderlichen SRV und des ersten SRV-Verschlechterungsbetrags;
einen Prozess des Berechnens eines zweiten Index, der die Eignung der Verwendung des zweiten Modulationsschemas für die Kommunikation repräsentiert, auf der Grundlage des zweiten erforderlichen SRV und des zweiten SRV-Verschlechterungsbetrags;
einen Prozess des Auswählens eines von dem ersten Modulationsschema und dem zweiten Modulationsschema als ein für die Kommunikation zu verwendendes Schema auf der Grundlage eines Ergebnisses eines Vergleichs zwischen dem ersten Index und dem zweiten Index; und
einen Prozess des Anweisens der Drahtlosempfangsvorrichtung, die Kommunikation unter Verwendung des ausgewählten Modulationsschemas durchzuführen.

## Revendications

1. Procédé de communication sans fil utilisant un dispositif (10) de transmission sans fil et un dispositif (12) de réception sans fil qui supportent au moins deux schémas de modulation multi-niveaux, les au moins deux schémas de modulation multi-niveaux incluant un premier schéma de modulation et un deuxième schéma de modulation, et
le dispositif de transmission sans fil incluant un amplificateur de puissance qui fait varier une puissance de transmission, le procédé de communication sans fil comprenant :
une étape d'acquisition, par le dispositif de transmission sans fil, d'un premier rapport signal/bruit, SNR, requis, devant être assuré lors de l'utilisation du premier schéma de modulation et d'un deuxième SNR requis devant être assuré lors de l'utilisation du deuxième schéma de modulation ;
une étape de modulation, par le dispositif de transmission sans fil, d'un signal de transmission en utilisant le premier schéma de modulation pour générer un premier signal modulé ;
une étape de modulation, par le dispositif de transmission sans fil, d'un signal de transmission en utilisant le deuxième schéma de modulation pour générer un deuxième signal modulé ;
une étape de calcul, par le dispositif de transmission sans fil, d'une première quantité de dégradation de SNR prédite pour se produire lorsque le premier signal modulé est amplifié par l'amplificateur de puissance à une puissance de transmission souhaitée, sur la base de caractéristiques d'entrée / de sortie de l'amplificateur de puissance ;
une étape de calcul, par le dispositif de transmission sans fil, d'une deuxième quantité de dégradation de SNR prédite pour se produire lorsque le deuxième signal modulé est amplifié par l'amplificateur de puissance à la puissance de transmission souhaitée, sur la base des caractéristiques d'entrée / de sortie ;
une étape de calcul, par le dispositif de transmission sans fil, d'un premier indice représentant l'adéquation de l'utilisation du premier schéma de modulation pour une communication sur la base du premier SNR requis et de la première quantité de dégradation de SNR ;
une étape de calcul, par le dispositif de transmission sans fil, d'un deuxième indice représentant l'adéquation de l'utilisation du deuxième schéma de modulation pour une communication sur la base du deuxième SNR requis et de la deuxième quantité de dégradation de SNR ;
une étape de sélection, par le dispositif de transmission sans fil, de l'un du premier schéma de modulation et du deuxième schéma de modulation en tant qu'un schéma devant être utilisé pour une communication sur la base d'un résultat de comparaison entre le premier indice et le deuxième indice ;
une étape de commande, par le dispositif de transmission sans fil, du dispositif de réception sans fil pour qu'il réalise une communication en utilisant le schéma de modulation sélectionné ; et
une étape de communication, par le dispositif de réception sans fil, avec le dispositif de transmission sans fil en utilisant le schéma de modulation commandé.

2. Procédé de communication sans fil selon la revendication 1, dans lequel le premier SNR requis est une valeur fixe définie pour le premier schéma de modulation, et le deuxième SNR requis est une valeur fixe définie pour le deuxième schéma de modulation.

3. Procédé de communication sans fil selon la revendication 1, dans lequel chacun du premier SNR requis et du deuxième SNR requis est une valeur définie sur la base de la qualité de communication devant être établie.

4. Procédé de communication sans fil selon l'une quelconque des revendications 1 à 3, dans lequel l'étape de calcul de la première quantité de dégradation de SNR inclut :
une étape d'estimation d'une première amplitude de vecteur d'erreur, EVM, qui est une EVM pour le premier signal modulé inclus dans le signal de transmission d'une trame ; et
une étape de calcul de la première quantité de dégradation de SNR sur la base de la première EVM, et
l'étape de calcul de la deuxième quantité de dégradation de SNR inclut : une étape d'estimation d'une deuxième EVM, qui est une EVM pour le deuxième signal modulé inclus dans le signal de transmission d'une trame ; et
une étape de calcul de la deuxième quantité de dégradation de SNR sur la base de la deuxième EVM.

5. Procédé de communication sans fil selon l'une quelconque des revendications 1 à 3, dans lequel
l'étape de calcul de la première quantité de dégradation de SNR inclut :
une étape d'estimation d'une première EVM, qui est une EVM pour le premier signal modulé inclus dans le signal de transmission sur une pluralité de trames ; et
une étape de calcul de la première quantité de dégradation de SNR sur la base de la première EVM, et
l'étape de calcul de la deuxième quantité de dégradation de SNR inclut : une étape d'estimation d'une deuxième EVM, qui est une EVM pour le deuxième signal modulé inclus dans le signal de transmission sur une pluralité de trames ; et
une étape de calcul de la deuxième quantité de dégradation de SNR sur la base de la deuxième EVM.

6. Procédé de communication sans fil selon la revendication 4 ou la revendication 5, dans lequel
l'étape de calcul de la première quantité de dégradation de SNR inclut en outre :
une étape de calcul d'un premier SNR moyen, qui est un SNR moyen pour le premier schéma de modulation ;
une étape de calcul d'un premier SNR prédit sur la base de la première EVM, le premier SNR prédit étant un SNR prédit pour se produire lorsque le premier signal modulé est transmis ; et
une étape de calcul d'une différence entre le premier SNR moyen et le premier SNR prédit en tant que la première quantité de dégradation de SNR, et
l'étape de calcul de la deuxième quantité de dégradation de SNR inclut en outre :
une étape de calcul d'un deuxième SNR moyen, qui est un SNR moyen pour le deuxième schéma de modulation ;
une étape de calcul d'un deuxième SNR prédit sur la base de la deuxième EVM, le deuxième SNR prédit étant un SNR prédit pour se produire lorsque le deuxième signal modulé est transmis ; et
une étape de calcul d'une différence entre le deuxième SNR moyen et le deuxième SNR prédit en tant que la deuxième quantité de dégradation de SNR.

7. Système de communication sans fil utilisant un dispositif (10) de transmission sans fil et un dispositif (12) de réception sans fil qui supportent au moins deux schémas de modulation multi-niveaux, dans lequel
les au moins deux schémas de modulation multi-niveaux incluent un premier schéma de modulation et un deuxième schéma de modulation,
le dispositif de transmission sans fil
inclut un amplificateur de puissance qui fait varier une puissance de transmission, et
est configuré pour exécuter :
un processus d'acquisition d'un premier SNR requis devant être assuré lors de l'utilisation du premier schéma de modulation et d'un deuxième SNR requis devant être assuré lors de l'utilisation du deuxième schéma de modulation ;
un processus de modulation d'un signal de transmission en utilisant le premier schéma de modulation pour générer un premier signal modulé ;
un processus de modulation d'un signal de transmission en utilisant le deuxième schéma de modulation pour générer un deuxième signal modulé ;
un processus de calcul d'une première quantité de dégradation de SNR prédite pour se produire lorsque le premier signal modulé est amplifié par l'amplificateur de puissance à une puissance de transmission souhaitée, sur la base de caractéristiques d'entrée / de sortie de l'amplificateur de puissance ;
un processus de calcul d'une deuxième quantité de dégradation de SNR prédite pour se produire lorsque le deuxième signal modulé est amplifié par l'amplificateur de puissance à la puissance de transmission souhaitée, sur la base des caractéristiques d'entrée / de sortie ;
un processus de calcul d'un premier indice représentant l'adéquation de l'utilisation du premier schéma de modulation pour une communication sur la base du premier SNR requis et de la première quantité de dégradation de SNR ;
un processus de calcul d'un deuxième indice représentant l'adéquation de l'utilisation du deuxième schéma de modulation pour une communication sur la base du deuxième SNR requis et de la deuxième quantité de dégradation de SNR ;
un processus de sélection de l'un du premier schéma de modulation et du deuxième schéma de modulation en tant qu'un schéma devant être utilisé pour une communication sur la base d'un résultat de comparaison entre le premier indice et le deuxième indice ; et
un processus de commande du dispositif de réception sans fil pour qu'il réalise une communication en utilisant le schéma de modulation sélectionné, et
le dispositif de réception sans fil est configuré pour communiquer avec le dispositif de transmission sans fil en utilisant le schéma de modulation commandé.

8. Dispositif (10) de transmission sans fil
qui supporte au moins deux schémas de modulation multi-niveaux et présente une fonction de communication avec un dispositif de réception sans fil qui supporte les au moins deux schémas de modulation multi-niveaux, dans lequel
les au moins deux schémas de modulation multi-niveaux incluent un premier schéma de modulation et un deuxième schéma de modulation, et
le dispositif de transmission sans fil
comprend un amplificateur de puissance qui fait varier une puissance de transmission, et
est configuré pour exécuter :
un processus d'acquisition d'un premier SNR requis devant être assuré lors de l'utilisation du premier schéma de modulation et d'un deuxième SNR requis devant être assuré lors de l'utilisation du deuxième schéma de modulation ;
un processus de modulation d'un signal de transmission en utilisant le premier schéma de modulation pour générer un premier signal modulé ;
un processus de modulation d'un signal de transmission en utilisant le deuxième schéma de modulation pour générer un deuxième signal modulé ;
un processus de calcul d'une première quantité de dégradation de SNR prédite pour se produire lorsque le premier signal modulé est amplifié par l'amplificateur de puissance à une puissance de transmission souhaitée, sur la base de caractéristiques d'entrée / de sortie de l'amplificateur de puissance ;
un processus de calcul d'une deuxième quantité de dégradation de SNR prédite pour se produire lorsque le deuxième signal modulé est amplifié par l'amplificateur de puissance à la puissance de transmission souhaitée, sur la base des caractéristiques d'entrée / de sortie ;
un processus de calcul d'un premier indice représentant l'adéquation de l'utilisation du premier schéma de modulation pour une communication sur la base du premier SNR requis et de la première quantité de dégradation de SNR ;
un processus de calcul d'un deuxième indice représentant l'adéquation de l'utilisation du deuxième schéma de modulation pour une communication sur la base du deuxième SNR requis et de la deuxième quantité de dégradation de SNR ;
un processus de sélection de l'un du premier schéma de modulation et du deuxième schéma de modulation en tant qu'un schéma devant être utilisé pour une communication sur la base d'un résultat de comparaison entre le premier indice et le deuxième indice ; et
un processus de commande du dispositif de réception sans fil pour qu'il mette en oeuvre une communication en utilisant le schéma de modulation sélectionné.
